# FASCICULE DE BREVET EUROPEEN

(11) **EP 0 827 693 B1**
(45) Date de publication et mention de la délivrance du brevet: **20.03.2002**
(21) Numéro de dépôt: 96202457.6
(22) Date de dépôt: 05.09.1996
(51) Int. Cl.: A21D 13/08, A23D 7/00, A23P 1/16, A23L 1/19

(54) **Produit de garniture pour pâtisserie-biscuiterie-confiserie, procédé de fabrication et produit composite garni**
Füllung für Backwaren- oder Keks- oder Süsswarenprodukte, Herstellungsverfahren und zusammengesetzte Füllung
A filling for pastry or biscuit or confectionery products, process for its preparation and composite filling

(43) Date de publication de la demande: 11.03.1998
(73) Titulaire: SOCIETE DES PRODUITS NESTLE S.A., 1800 Vevey (CH)
(72) Inventeur: Wang, Junkuan, 1010 Lausanne (CH); Pernin, Jacques, 1802 Corseaux (CH)
(74) Mandataire: Archambault, Jean

(56) Documents cités:
- EP-A- 0 072 212
- EP-A- 0 540 085
- EP-A- 0 607 471
- EP-A- 0 609 465
- EP-A- 0 667 104
- GB-A- 1 261 910
- US-A- 3 433 643
- US-A- 5 518 752
- PATENT ABSTRACTS OF JAPAN vol. 017, no. 663 (C-1138), 8 Décembre 1993 & JP 05 219887 A (FUJI OIL CO LTD), 31 Août 1993,

## Description

La présente invention a trait à un produit alimentaire sous forme d'une masse aérée pour pâtisserie-biscuiterie-confiserie, un procédé de fabrication du dit produit alimentaire, ainsi qu'un produit de biscuiterie confiserie composite comprenant ledit produit alimentaire aéré en tant que garniture.

On connait, par exemple de GB-A-1261910, une pâte à tartiner aérée à base de protéines lactiques et de lactose préparée à partir d'une dispersion lactique aqueuse acidifiée par fermentation par des bactéries thermophiles qui, après addition d'une phase grasse, est transformée en émulsion, pasteurisée, puis refroidie tout en étant travaillée mécaniquement, par exemple dans un échangeur à surface raclée, dans lequel elle est simultanément aérée par incorporation d'un gaz inerte. Un tel produit est destiné à être entreposé sous réfrigération.

Il est connu, par exemple par la demande de brevet EP-A-0607471, de préparer un produit alimentaire protéique sucré à base de protéines lactiques se présentant sous forme d'une masse aérée de texture ferme et onctueuse, de goût lacté neutre. Un tel produit se conserve pendant un certain temps sans modification de structure, à condition toutefois d'être réfrigéré, par exemple à 8-15° C.

La présente invention a pour but de proposer un produit alimentaire contenant une quantité importante de protéines de lait, se présentant sous forme d'une masse aérée, possédant une texture ferme pouvant aller d'onctueuse à cassante, et pouvant conserver ses propriétés lors d'une conservation prolongée à température ambiante, soit jusqu'à 30° C tout en restant organoleptiquement et physico-chimiquement stable et celà sans incorporation d'additifs épaississants ou gélifiants et sans émulsification ni traitement thermique de pasteurisation, toutes mesures susceptibles de donner du corps à la dite masse.

L' invention concerne un produit alimentaire sous forme d'une masse aérée pour biscuiterie-confiserie, contenant des protéines lactiques, des sucres, de la matière grasse et de l'eau, caractérisé par le fait que la masse aérée est sous forme essentiellement non émulsionnée, qu'elle est physico-chimiquement et organoleptiquement stable jusqu'à 30° C, qu'elle ne contient pas d'additifs épaississants ou gélifiants, que sa teneur en matières sèches est 80 à 90 % en poids, qu'elle contient 30 à 60 % en poids de matière grasse et que la matière grasse a une teneur en solides supérieure ou égale à 8% en poids à 30° C.

Une caractéristique importante de l'invention est que la structure de la masse est donnée par la nature et l'état de la matière grasse à une température allant jusqu'à 30° C. Ainsi, le choix de la matière grasse joue un rôle déterminant dans la consistance de la présente masse. Celle-ci doit être en partie sous forme cristallisée, de sorte que les cristaux de graisse soient capables de former un réseau retenant dans ses mailles la matière grasse encore liquide. Aussi, la structure obtenue est très différente de celle d'une émulsion.

Cet objectif de structure et de texture est atteint notamment lorsque l'on utilise de manière prépondérante dans le mélange des matières grasses, une matière grasse de haute compatibilité avec les autres matières grasses, notamment avec la matière grasse lactique, en clair de manière à ne former qu'un minimum d'eutectique avec les autres matières grasses de la masse et ayant une teneur en matière solide relativement constante autour de la température ambiante et en particulier dans la gamme de 15 à 30° C.

Dans ce cadre, on préfère mettre en oeuvre un mélange de matières grasses contenant une graisse végétale ou une fraction de graisse végétale qui a un comportement à la fusion caractérisé par une courbe plate dans la région de 15 à 30° C, par exemple du type appelé "équivalent au beurre de cacao ", ci-après CBE, c'est à dire dont le comportement à la fusion est très semblable au beurre de cacao. Un mélange de matières grasses préféré comprend, en poids, 60 à 75 % de CBE, 20 à 35 % d'huile végétale hydrogénée du type shortening ou d'huile végétale ou de fraction d'huile végétale riche en acide oléique et 0 à 10 % de graisse lactique. Comme huile végétale on peut citer, par exemple, l'huile de tournesol, l'huile de soja, l'huile de maïs, l'huile d'arachide. Comme fraction d'huile végétale, on peut citer, par exemple, l'oléine de palme.

Un mélange de graisses particulièrement approprié contient 30 à 60 % en poids de matière solide à 20° C et 8 à 30 % en poids de matière solide à 30° C.

Le produit peut être aromatisé, par exemple par addition d'un arôme de fruit, de vanille, d'une poudre de cacao ou de café. Il peut contenir des vitamines, des minéraux et des acides aminés.

Dans un mode de réalisation préféré, le produit contient du calcium ajouté, sous forme de sel, par exemple de carbonate, correspondant par exemple à environ 1 à 2 % en poids du produit.

L'invention concerne également un procédé de préparation d'un produit alimentaire précédent, dans lequel on prépare un mélange comprenant de la poudre de lait écrémé, du lait concentré sucré et des sucres, on ajoute à ce mélange une phase grasse, à une température telle que la matière grasse contenue dans ladite phase grasse est liquide, on refroidit le mélange à température ambiante en le travaillant mécaniquement et on l'aère par injection d'un gaz inerte.

Un avantage de la présente invention est que le produit alimentaire ainsi préparé présente une structure aérée, une texture lisse allant de mousseuse, crémeuse à compacte et cassante, ainsi que des notes aromatiques lactiques.

Un autre avantage est de permettre la préparation d'un produit présentant une bonne stabilité physico-chimique et organoleptique après conservation pendant plusieurs mois à la température ambiante, et même jusqu'à 30° C.

Un autre avantage est de permettre la préparation d'un produit équilibré nutritionnellement, riche en protéines de lait, pouvant contenir au moins 50% de matières premières d'origine lactique.

Le mélange contient au moins un sucre. Ceci permet, d'une part de diminuer la valeur d'activité de l'eau du produit aéré final, donc d'assurer une bonne conservation microbiologique dudit produit, d'autre part d'obtenir, après incorporation d'un gaz, une mousse ferme, qui va conserver sa fermeté lors de l'entreposage à la température ambiante et même jusqu'à 30° C.

On peut, par exemple, ajouter du saccharose et/ou du sucre inverti. On peut également ajouter un agent de lest, par exemple de la maltodextrine.

Pour ce faire, on peut porter la température des sucres à 30-50° C, puis les ajouter. On obtient ainsi une phase aqueuse se présentant sous forme d'une masse, pompable, à 60-70% de taux de matière sèche.

On prépare également une phase grasse.
On choisit donc les composés constituants la phase grasse en fonction des propriétés souhaitées, puis on les mélange.
Pour ce faire, il est possible d'élever la température du mélange des différentes matières grasses, à environ 45-50° C, de manière à obtenir une phase grasse homogène et à en permettre la manipulation ultérieure, par exemple le pompage.

On mélange ensuite ladite phase grasse et ladite phase aqueuse.
On aére alors le mélange, par exemple par injection d'un gaz inerte dans la masse.
On peut ainsi injecter de l'azote, tout en maintenant une température de 20-30° C, avec action mécanique.

On obtient un produit alimentaire se présentant sous forme d'une masse aérée, de consistance ferme et stable, dont la mousse est fine et "se tient" bien, c'est-à-dire ne retombe et/ou ne coule pas après conservation et/ou manipulation, et présentant également une texture crémeuse, onctueuse et lisse en bouche.
Ce produit peut également être défini à l'aide des caractéristiques suivantes :
- masse volumique: environ 500-1000 g/l
- teneur en eau: 10-20 %
- teneur en matière grasse: 30-60 % et
- activité de l'eau: environ 0,65-0,77.

L'invention concerne également l'utilisation dudit produit alimentaire aéré en tant que garniture dans un produit composite comprenant par ailleurs un produit du four.

L'invention concerne enfin ledit produit composite, constitué d'au moins deux parties de produit du four, séparées par ledit produit alimentaire aéré, le cas échéant enrobé de chocolat ou d'une masse de couverture grasse.

On peut conserver ce produit pendant un certain temps, plusieurs mois à une température allant jusqu'à 30° C.

Ledit produit alimentaire peut alors être utilisé dans la préparation d'un produit composite, constitué par ailleurs d'au moins deux parties de produit du four, entre lesquelles est disposé, en tant que garniture, ledit produit alimentaire aéré. Le produit composite résultant peut être enrobé, par exemple de chocolat au lait.

On peut, par exemple, employer comme produit du four, du biscuit, de la génoise ou un petit pain au lait ou éventuellement brioché.

L'invention est illustrée plus en détail dans les exemples de réalisation suivants. Dans ces exemples, les parties et pourcentages sont en poids, sauf indication contraire.

La teneur en matière solide (SFC) de la phase grasse est mesurée par résonnance magnétique nucléaire pulsée (méthode IUPAC 2.150 6.3.2).

### Exemple 1

On mélange du lait écrémé en poudre, de la maltodextrine, du carbonate de calcium, du sel et de la vanilline, représentant 10,36 kg, puis on ajoute 23,76 kg de lait concentré sucré à 20-22° C avec un mélangeur planétaire sans grande force d'attrition. On y ajoute pas à pas, 14,6 kg d'un mélange de sirop de sucre inverti et de sirop de glucose à 45° C. Cette masse constitue la phase aqueuse.

On prépare une phase grasse de la manière suivante.
On mélange sous brassage modéré dans une cuve thermostatée à 45-47° C, 31,2 kg de matière grasse composée de 68 % d'Illexao ® (CBE), 24 % de Biscuitine N ® et 8 % de graisse lactique, auxquels on ajoute une quantité de lécithine correspondant à 0,1 % de la masse de mélange liquide (phase grasse + phase aqueuse).

La phase grasse a 38,2 % de matière solide à 20° C et 12,1 % de matière solide à 30° C.

Après mélange de la phase aqueuse et de la phase grasse avec un mélangeur planétaire sans grande force d'attrition, donc sans émulsification, on obtient un liquide pompable dont la température est 30-32° C, que l'on pompe à travers un premier échangeur de chaleur à surface raclée où il est refroidi à 25-26° C tout en étant travaillé mécaniquement, puis de là à travers un second échangeur à surface raclée où il est refroidi à 22-23° C tout en étant travaillé mécaniquement et dans lequel on injecte de l'azote.

On peut utiliser un seul échangeur de chaleur à surface raclée à la place des deux éxhangeurs précédents montés en série.

On obtient ainsi une crème aromatisée à la vanille, ferme et homogène, que l'on peut conserver à une température allant jusqu'à 30° C pendant 6 mois sans aucune modification de texture ni de goût.

Cette crème à la vanille présente les caractéristiques suivantes:
- taux de matière sèche 87 %
- pH 7,0
- valeur d'activité de l'eau (Aw) 0,76
- taux de matière grasse 41,87%
- dont matière grasse lactique 5,67 %
- taux de protéines
   (toutes d'origine lactique) 7,8 %
- masse volumique 610 g/l
- texture et consistance ferme, mousseuse,
   lisse et cassante

### Exemples 2-6

On procède comme à l'exemple 1 avec des phases grasses ayant les compositions et les teneurs en matière solide (SFC) indiquées dans le tableau 1 ci-après, le CBE étant le même qu'à l'exemple 1.

**Tableau 1**

| **Exemple Composition des graisses (%)** | **2** | **3** | **4** | **5** | **6** |
|---|---|---|---|---|---|
| CBE | 68 | 72 | 72 | **72** | 72 |
| | | | | | |
| Oléine de palme | 24 | - | - | - | - |
| | | | | | |
| Huile de tournesol riche en | - | 20 | - | - | - |
| | | | | | |
| acide oléique | | | | | |
| | | | | | |
| Huile de soja | - | - | 20 | - | - |
| | | | | | |
| Huile d'arachide | - | - | - | 20 | - |
| | | | | | |
| Huile de maïs | - | - | - | - | 20 |
| | | | | | |
| Graisse lactique | 8 | 8 | 8 | 8 | 8 |
| | | | | | |
| **SFC, 20° C** | 38,2 | 41,3 | 41,3 | 40,3 | 41,3 |
| **SFC, 30° C** | 14,1 | 15,4 | 15,5 | 15,1 | 15,8 |

Dans tous les cas, les propriétés des produits obtenus sont semblables à celles du produit de l'exemple 1.

### Exemple 7

On fabrique une bande mince de génoise d'environ 5mm d'épaisseur en appliquant en couche mince sur toute la largeur de la bande métallique d'un four à bande continu et en cuisant une pâte composée d'eau, de pâte d'amande, de sirop de glucose, de Biscuitine N ®, de concentré d'oeuf contenant 50 % de sucre et d'émulsifiant, que l'on mélange à de la farine de blé, de l'amidon de blé, de la poudre de lait écrémé, de la poudre de vanille, du sel, du sucre et de la poudre à lever.

Après découpe tranversale de plaques rectangulaires, on imprègne ces plaques de génoise d'un sirop alcoolisé, on y dépose la masse aérée préparée selon l'exemple 1 en couche d'environ 5 mm comme garniture, puis on recouvre la garniture avec une plaque rectangulaire de génoise de mêmes dimensions que celle ayant servi de support à la garniture, ce qui donne des plaques fourrées composées de masse aérée entre deux couches de génoise. Après découpe des plaques fourrées en doigts de forme parallélépipédique, on enrobe les doigts avec une couverture de chocolat au lait, on place les articles enrobés sur des cartonnettes et on emballe hermétiquement les articles individuellement en emballage souple de polypropylène orienté métallisé.

Les articles se conservent sans modification de structure, de texture ni de goût à une température allant jusqu'à 30° C pendant 6 mois.

## Revendications

1. Produit alimentaire sous forme d'une masse aérée pour pâtisserie-biscuiterie-confiserie, contenant des protéines lactiques, au moins un sucre, de la matière grasse et de l'eau, **caractérisé par le fait que** la masse aérée est sous forme essentiellement non émulsionnée, qu'elle est physico-chimiquement et organoleptiquement stable jusqu'à 30° C, qu'elle ne contient pas d'additifs épaississants ou gélifiants, que sa teneur en matières sèches est 80 à 90 % en poids, qu'elle contient 30 à 60 % en poids de matière grasse et que la matière grasse a une teneur en solides supérieure ou égale à 8% en poids à 30° C.

2. Produit alimentaire selon la revendication 1, **caractérisé par le fait que** l'on utilise de manière prépondérante dans le mélange des matières grasses, une matière grasse ou une fraction de matière grasse de haute compatibilité avec les autres matières grasses, notamment avec la matière grasse lactique, en clair ne formant qu'un minimum d'eutectique avec les autres matières grasses de la masse et ayant une teneur en matière solide relativement constante autour de la température ambiante et en particulier dans la gamme de 15 à 30° C.

3. Produit alimentaire selon la revendication 1, **caractérisé par le fait que** l'on met en oeuvre un mélange de matières grasses contenant une graisse végétale équivalente au beurre de cacao, dont le comportement à la fusion est très semblable au beurre de cacao.

4. Produit alimentaire selon la revendication 1, **caractérisé par le fait que** l'on met en oeuvre un mélange de matières grasses comprenant, en poids, 60 à 75 % d'équivalent au beurre de cacao mou, 20 à 35 % d'huile végétale hydrogénée du type shortening ou d'huile végétale ou de fraction d'huile végétale riche en acide oléique et 0 à 10 % de graisse lactique.

5. Produit alimentaire selon la revendication 1, **caractérisé par le fait que** l'on met en oeuvre un mélange de graisses contenant 30 à 60 % en poids de matière solide à 20° C et 8 à 30 % en poids de matière solide à 30° C.

6. Produit alimentaire selon l'une des revendications 1 à 5, **caractérisé par le fait qu'**il contient du calcium ajouté, sous forme de sel, notamment de carbonate, correspondant à environ 1 à 2 % en poids.

7. Procédé de fabrication d'un produit alimentaire selon la revendication 1, dans lequel on prépare un mélange comprenant de la poudre de lait écrémé, du lait concentré sucré et des sucres, on ajoute à ce mélange une phase grasse, à une température telle que la matière grasse contenue dans ladite phase grasse est liquide, on refroidit le mélange à température ambiante en le travaillant mécaniquement et on l'aère par injection d'un gaz inerte.

8. Utilisation du produit alimentaire selon la revendication 1, comme garniture dans un produit composite comprenant par ailleurs un produit du four.

9. Produit composite constitué d'au moins deux parties de produit du four, séparées par le produit alimentaire aéré selon la revendication 1.

10. Produit composite selon la revendication 9, enrobé d'une couverture grasse, notamment de chocolat

## Patentansprüche

1. Nahrungsmittelprodukt in Form einer belüfteten Masse für Konditorei-, Keks- und Süßwaren, das Milchproteine, mindestens einen Zucker, Fett und Wasser enthält, **dadurch gekennzeichnet, dass** die belüftete Masse in im wesentlichen nichtemulgierter Form vorliegt, dass sie physikalisch-chemisch und organoleptisch bis zu 30°C stabil ist, dass sie keine Verdickungs- oder Gelierzusätze enthält, dass ihr Trockenmassegehalt 80 bis 90 Gew.-% beträgt, dass sie 30 bis 60 Gew.-% Fett enthält und dass das Fett einen Gehalt an Festsubstanzen bei 30°C von 8 Gew.-% oder mehr besitzt.

2. Nahrungsmittelprodukt nach Anspruch 1, **dadurch gekennzeichnet, dass** man in der Mischung der Fette vorwiegend en Fett oder eine Fettfraktion verwendet, das bzw. die mit den anderen Fetten, insbesondere mit Milchfett, hoch kompatibel ist, d.h. mit den anderen Fetten der Masse nur ein Minimum von Eutektikum bildet und einen relativ konstanten Festsubstanzgehalt im Raumtemperaturbereich und insbesondere im Bereich von 15 bis 30°C besitzt.

3. Nahrungsmittelprodukt nach Anspruch 1, **dadurch gekennzeichnet, dass** man eine Mischung von Fetten verwendet, die ein zu Kakaobutter äquivalentes Pflanzenfett enthält, dessen Schmelzverhalten dem der Kakaobutter sehr ähnlich ist.

4. Nahrungsmittelprodukt nach Anspruch 1, **dadurch gekennzeichnet, dass** man eine Mischung von Fetten verwendet, die, bezogen auf das Gewicht, 60 bis 75% Äquivalent zu weicher Kakaobutter, 20 bis 35% hydrogeniertes Pflanzenöl vom Typ Backfett oder Pflanzenöl oder Pflanzenölfraktion mit hohem Ölsäuregehalt und 0 bis 10% Milchfett enthält.

5. Nahrungsmittelprodukt nach Anspruch 1, **dadurch gekennzeichnet, dass** man eine Mischung von Fetten verwendet, die 30 bis 60 Gew.-% Festsubstanz bei 20°C und 8 bis 30 Gew.-% Festsubstanz bei 30°C enthält.

6. Nahrungsmittelprodukt nach einem der Ansprüche 1 bis 5, **dadurch gekennzeichnet, dass** es zugesetztes Calcium in Salzform, insbesondere als Carbonat, enthält, das ungefähr 1 bis 2 Gew.-% entspricht.

7. Verfahren zur Herstellung eines Nahrungsmittelprodukts nach Anspruch 1, bei dem man eine Mischung herstellt, die Magermilchpulver, gesüßte konzentrierte Milch und Zucker enthält, dieser Mischung eine Fettphase bei einer solchen Temperatur beigibt, dass das in dieser Fettphase enthaltene Fett flüssig ist, die Mischung auf Raumtemperatur kühlt, indem man sie mechanisch durcharbeitet, und sie durch Inertgaseinspritzung belüftet.

8. Verwendung des Nahrungsmittelprodukts nach Anspruch 1 als Belag in einem Verbundprodukt, das außerdem eine Backware umfasst.

9. Verbundprodukt, das aus mindestens zwei Backwarenteilen besteht, die durch das belüftete Nahrungsmittelprodukt nach Anspruch 1 getrennt sind.

10. Mit einer fetten Kuvertüre, insbesondere einer Schokoladekuvertüre umhülltes Verbundprodukt nach Anspruch 9.

## Claims

1. Food product in the form of an aerated mass for pastry-making/biscuit-making/confectionery, containing lactic proteins, at least one sugar, fats and water, **characterized in that** the aerated mass is in a substantially non-emulsified form, that it is physicochemically and organoleptically stable up to 30°C, that it does not contain thickening or gelling additives, that its dry matter content is 80 to 90 % by weight, that it contains 30 to 60 % by weight of fats and that the fats have a solid content greater than or equal to 8 % by weight at 30°C.

2. Food product according to claim 1, **characterized in that** a fat or a fat fraction with high compatibility with other fats, in particular with lactic fats, is used in a preponderant manner in the mixture of fats, so that clearly only a minimum of eutectic is formed with the other fats of the mass and having a relatively constant solid matter content around ambient temperature and in particular within the range of 15 to 30°C.

3. Food product according to claim 1, **characterized in that** a mixture of fats is used containing a vegetable fat equivalent to cocoa butter, of which the behaviour on melting is very similar to cocoa butter.

4. Food product according to claim 1, **characterized in that** a mixture of fats is used comprising, by weight, 60 to 75 % of an equivalent to soft cocoa butter, 20 to 35 % of a hydrogenated vegetable oil of the shortening type or a vegetable oil or vegetable oil fraction rich in oleic acid, and 0 to 10 % lactic fat.

5. Food product according to claim 1, **characterized in that** a mixture of fats is used containing 30 to 60 % by weight of solid matter at 20°C and 8 to 30 % by weight of solid matter at 30°C.

6. Food product according to one of claims 1 to 5, **characterized in that** it contains added calcium in the form of a salt, in particular a carbonate, corresponding to approximately 1 to 2 % by weight.

7. Method for producing a food product according to claim 1, wherein a mixture is prepared comprising powdered skimmed milk, sweetened concentrated milk and sugars, a fatty phase is added to this mixture at a temperature such that the fats contained in the said fatty phase are liquid, the mixture is cooled to ambient temperature while working it mechanically, and it is aerated by injecting an inert gas.

8. Use of the food product according to claim 1 as a filling in a composite product additionally including an oven-baked product.

9. Composite product consisting of at least two parts of the oven-baked product separated by the aerated food product according to claim 1.

10. Composite product according to claim 9, covered with a fatty coating, in particular chocolate.
